# EUROPÄISCHE PATENTSCHRIFT

(11) **EP 0 911 511 B1**
(45) Veröffentlichungstag und Bekanntmachung des Hinweises auf die Patenterteilung: **15.09.2004**
(21) Anmeldenummer: 98111578.5
(22) Anmeldetag: 24.06.1998
(51) Int. Cl.: F02M 45/02, F01N 3/20, F02M 63/02, F02D 41/40

(54) **Verfahren zur Einspritzung von Kraftstoff in die Brennräume einer luftverdichtenden, selbstzündenden Brennkraftmaschine**
Method of injection of fuel into the combustion chamber of a diesel engine
Procédé d'injection de carburant dans la chambre de combustion d'un moteur auto-allumage par compression d'air

(30) Priorität: 25.10.1997 DE 19747231
(43) Veröffentlichungstag der Anmeldung: 28.04.1999
(73) Patentinhaber: ROBERT BOSCH GMBH, 70442 Stuttgart (DE)
(72) Erfinder: Krieger, Klaus, 7151 Affalterbach (DE); Grieshaber, Hermann, 72631 Aichtal (DE); Haerle, Heribert, 70439 Stuttgart (DE)

(56) Entgegenhaltungen:
- EP-A- 0 621 400
- EP-A- 0 741 244
- EP-A- 0 767 303

## Beschreibung

### Stand der Technik

Die Erfindung geht von einem Verfahren gemäß der Gattung des Patentanspruchs 1 aus. Bei einem solchen, durch die EP-A1-0 621 400 bekannten Verfahren wird eine Nacheinspritzung von Kraftstoff nach der Haupteinspritzung in Verbindung mit einer Abgasnachbehandlungseinrichtung vorgeschlagen mit dem Ziel, die NOₓ-Bestandteile im Abgas zu reduzieren. Als Nachbehandlungseinrichtung ist dabei ein sog. DENOX-Katalysator vorgesehen, der in Verbindung mit hochreaktiven Kohlenwasserstoff-Bruchstücken im Abgas eine Reduktion der NOₓ Bestandteile bewirken soll. Diese Reduktion ist insbesondere nur dann effizient, wenn noch unverbrannte Kohlenwasserstoffe in den Katalysator gelangen. Dazu wird insbesondere eine späte Nacheinspritzung verwendet, die 80° Kurbelwinkel nach dem oberen Totpunkt zur Einspritzung gelangen, wobei der Kraftstoff zwar nicht verbrennt aber aufgrund der Restwärme optimal aufbereitet wird, indem er verdampft oder gecrackt wird. Die somit entstandenen CH-Moleküle können dann in der Folge eine optimale NOₓ-Umsetzung im Katalysator bewirken. Diese Kraftstoffeinspritzung ist jedoch erst aktiv bzw. wirksam, wenn die Betriebstemperatur des Katalysators bzw. die Betriebsbereich, bei dem diese optimale Abgastemperatur noch nicht erreicht ist, wird weiterhin vorgeschlagen, eine frühe Nacheinspritzung zu bewirken, die im Bereich zwischen 20° und 80° Kurbelwellenwinkel nach OT liegen soll. Diese Einspritzung erfolgt dann, wenn die Verbrennung der über die Haupteinspritzung eingebrachten Kraftstoffmenge zumindest weitgehend beendet ist. Die danach eingespritzten Kraftstoffmenge über die Nacheinspritzung soll anschließend möglichst vollständig verbrennen, um die Abgastemperatur aufzuheizen und den Katalysator auf die gewünschte Temperatur zu bringen. Ist dies erreicht, erfolgt die Nacheinspritzung nach der vorgenannten Verfahrensweise.

Neben dem Ziel, die NOₓ-Emission zu senken, besteht aber bei Dieselbrennkraftmaschinen bezüglich der Abgasemission auch die Aufgabe, die Rußbestandteile im Abgas gering zu halten. Hierzu gibt das bekannte Verfahren keine Ansatzpunkte. Über das Ziel der Senkung der Rußemission hinaus besteht weiterhin im Sinne einer Optimierung eines Dieseleinspritzsystems auch die Aufgabe, den spezifischen Kraftstoffverbrauch und das Geräusch niedrig zuhalten.

Weiterhin ist aus der EP 767 303 A1 ein Verfahren zur Einspritzung von Kraftstoff bekannt, bei dem die übliche Haupteinspritzmenge in zwei Teilmengen aufgeteilt wird, von denen die eine anfangs des Einlasshubes und die andere anfangs des Expansionshubes des Kolbens eingespritzt werden soll. Da dies zu einem zu mageren Gemisch mit daraus resultierender unvollständiger Verbrennung führen kann, wird als zusätzliche Massnahme vorgeschlagen, bei etwa 30 Grad Kurbelwinkel nach Durchlauf des oberen Totpunktes eine kleine Menge Kraftstoff zusätzlich einzuspritzen. Nachteilig ist, dass die zusätzliche Einspritzung an den Kurbelwinkel gekoppelt ist. Im Betrieb der Brennkraftmaschine ist das Ende der Haupteinspritzung variabel, abhängig von der Last, sowie der Lage und Dauer der Haupteinspritzung. Ist nun der Beginn der Zusatzeinspritzung an den Kurbelwinkel gekoppelt, so ist der Abstand vom Ende der Häupteinspritzung bis zum Beginn der Zusatzeinspritzung ebenso variabel, was zu einer unterschiedlichen Wirksamkeit der Zusatzeinspritzung im Hinblick auf Verbrennung und Schadstoffreduzierung führt.

### Vorteile der Erfindung

Durch das erfindungsgemäße Verfahren gemäß dem Kennzeichen des Patentanspruchs 1 wird eine erhebliche Senkung der Rußentwicklung im Abgas bei gegebenen Betriebsparametern erzielt. Es ist zusätzlich die Möglichkeit gegeben, den Kraftstoffverbrauch unter Einhaltung bestimmter NOₓ-Werte des Abgases zu senken.

Bei konventionellen Kraftstoffeinspritzsystemen treten häufig ungewollte Nacheinspritzungen auf, die aus Fehlern der Einspritzanlage resultieren. Solche Fehler sind z.B. Mängel an der Einspritzdüse und der Dynamik des Druckwellenverlaufes zwischen Kraftstoffeinspritzpumpe und Einspritzdüse. Solche ungewollten Nacheinspritzungen von Kraftstoff treten bei geringem Kraftstoffeinspritzdruck auf, der gerade einmal den Düsenöffnungsdruck der Einspritzventile überschreitet. Der in den Brennraum gelangte Kraftstoff ist dann schlecht aufbereitet und die Einbringung erfolgt zu einem x-beliebigen, nicht zeitgerechten Zeitpunkt. Solche ungewollten Einspritzungen verursachen eine hohe HC- und Rußemission. Durch Verkokung an den Einspritzdüsen wird zudem die Einspritzcharakteristik der Einspritzdüsen negativ beeinflußt. Im Sinne des eingangs genannten Stands der Technik wurde ein Verfahren entwickelt, die Nacheinspritzung gezielter vorzunehmen, um die Wirksamkeit eines Abgaskatalysators zu erhöhen. Die dabei nacheingespritzte Kraftstoffmenge nimmt nicht an der eigentlichen Verbrennung des Arbeitstaktes teil und unterliegt auch nicht den höheren Anforderungen an die Zeitgenauigkeit der Einspritzung, die genaue Einhaltung der Menge der Einspritzung und eines bestimmten Einspritzdruckes.

Mit der gezielten Nacheinspritzung gemäß der Erfindung, die an das Ende der Haupteinspritzung gekoppelt ist, d.h. sich nach Beendigung des Einspritzvorgangs für die Haupteinspritzung unmittelbar anschließt, erhält man eine unterteilte Einspritzung, die äußerst wirksam im Bezug auf die Reduzierung der Rußemission ist. Dabei ist ganz wesentlich, daß die Kraftstoffeinspritzung bei der Nacheinspritzung unter dem selben Einspritzdruck erfolgt wie die Einspritzung bei der Haupteinspritzung. Dies unterscheidet diese Einspritzung vor allen gegenüber den ungewollten Nacheinspritzern bei niedrigem Einspritzdruck. In Verbindung mit einem Einspritzsystem, das einem Hochdruckkraftstoffspeicher zur Verfügung stellt, der ständig von einer Hochdruckpumpe versorgt wird und dessen Kraftstoff von elektrisch gesteuerten Kraftssoffeinspritzventilen entnommen wird, ist die erfindungsgemäße Kraftstoffeinspritzung mit Haupt- und Nacheinspritzung möglich. Der hohe Kraftstoffdruck auch bei der Nacheinspritzung bewirkt eine optimale Aufbereitung des eingebrachten Kraftstoffs, der an der Verbrennung weiterhin teilnimmt. Haupt- und Nacheinspritzung stellen zusammen die Gesamteinspritzmenge pro Arbeitstakt der Brennkraftmaschine dar gemäß Patentanspruch 2. In vorteilhafter Weise erfolgt die Nacheinspritzung möglichst kurz nach Ende der Haupteinspritzung. Sie ist somit fest an das Ende der Haupteinspritzung gekoppelt und nur so ergibt sich die günstige Wirksamkeit der Nacheinspritzung, die einen erneut einsetzenden Verbrennungsvorgang initiiert unter Druck- und Temperaturbedingungen des Brennraums, die für eine Kraftstoffverbrennung im Arbeitstakt erforderlich sind. Durch diese neu einsetzende Einspritzung wird der Umsatz der bereits eingebrachten Kraftstoffmenge zusammen mit der Nacheinspritzung nochmals erneut in Gang gesetzt.

Gemäß Patentanspruch 4 ändert sich die Menge der Nacheinspritzung in Abhängigkeit von dem Betriebsparameter der Brennkraftmaschine und wird gemäß Patentanspruch 5 durch eine elektrische Steuereinrichtung gesteuert, die dafür Sorge trägt, daß die Nacheinspritzung im gewünschten Anschluß an die Haupteinspritzung erfolgt und in der erforderlichen Menge. Diese Steuerwerte für die Steuereinrichtung werden in einem Kennfeld abgelegt, das in einem Optimierungsverfahren ermittelt wurde und brennkraftmaschinenspezifisch ist. Dabei erfolgt die Nacheinspritzung gemäß Patentanspruch 7 erst nach Überschreiten eines unteren Lastpunktes, unterhalb dem keine besondere Wirksamkeit der Nacheinspritzung nachweisbar ist. Gemäß Patentanspruch 8 wird im Rahmen der Kennfeldfestlegung die Menge der Nacheinspritzung auch im Bezug auf die Last optimiert. Dabei kann es sich ergeben, daß die einzuspritzende Kraftstoffmenge je nach Betriebsdrehzahl mit steigender Last zu- oder abnehmen muß, um eine optimierte Rußemissionssenkung zu erzielen. In diesem Zusammenhang werden wesentliche Rußemissionsreduktionen in der Regel erst ab Lastbereichen von 10 bis 25% Vollast erzielbar sein, so daß der Betrieb einer Brennkraftmaschine mit Nacheinspritzung hauptsächlich im mittleren und oberen Lastbereich erfolgt. Gemäß Patentanspruch 11 wird die Festlegung der Steuerwerte für die Steuereinrichtung im Kennfeld unter Zuhilfenahme von Sensoren vorgenommen, wobei zur Steuerung des Beginns der Nacheinspritzung insbesondere mit Hilfe von an den Einspritzventilen angebrachten Sensoren die Öffnungs- und Schließzeitpunkte der Einspritzventile bei den verschiedenen Betriebspunkten erfaßt werden. Dies geschieht unter Beobachtung der Rußemission im Abgas und einer Optimierung von Nacheinspritzmenge. Gemäß Patentanspruch 12 wird die Optimierung auch durch Variation des Einspritzdruckes, der durch den Kraftstoff des Kraftstoffhochdruckspeichers zur Verfügung steht vorgenommen. Diese Optimierung wirkt sich insbesondere auch positiv im Sinne einer NOₓ Bestandteilsenkung und einer Kraftstoffverbrauchssenkung aus.

### Zeichnung

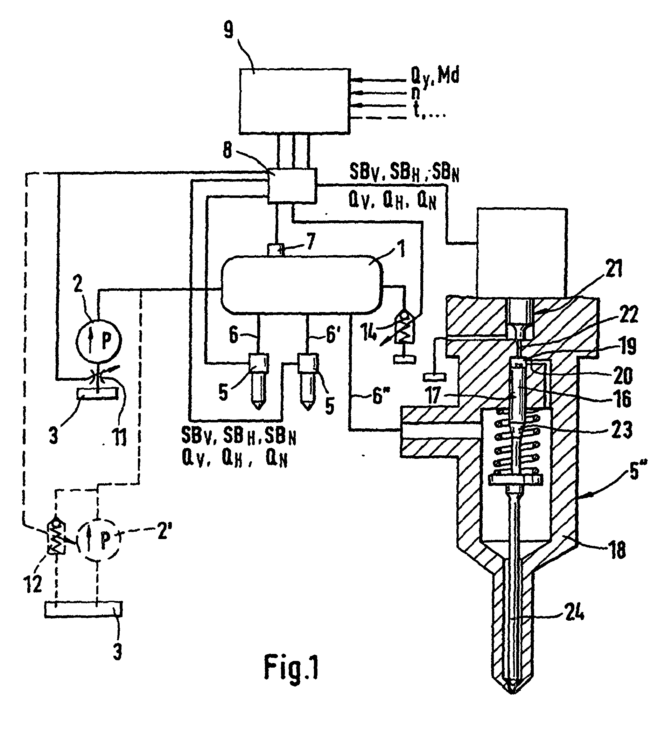

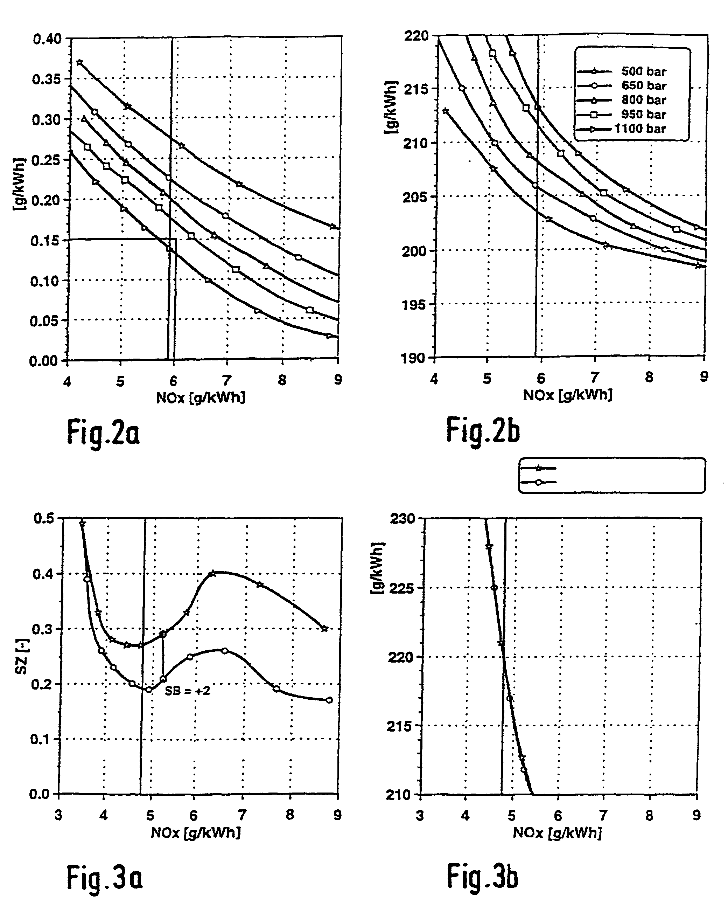

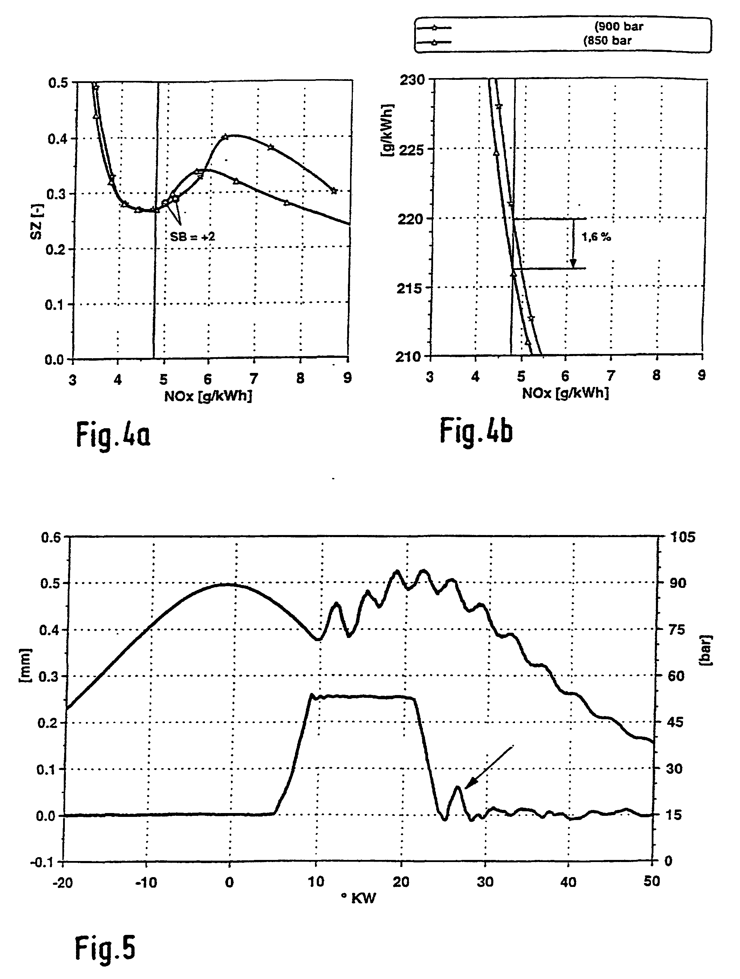

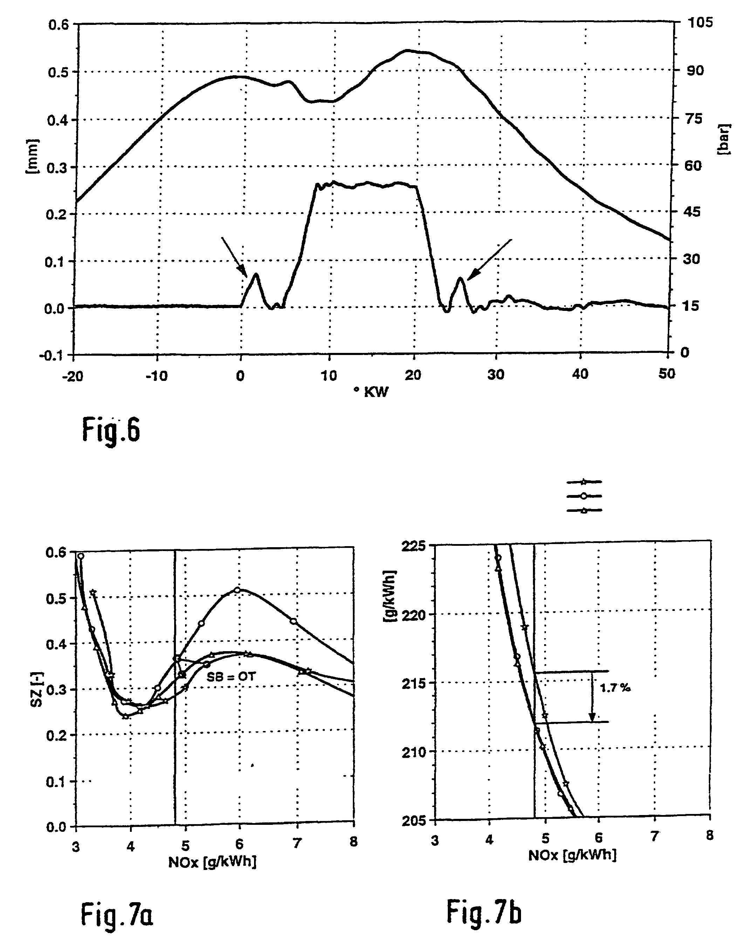

In der Zeichnung wird das erfindungsgemäße Verfahren anhand einer Ausführungsform und Diagrammen näher erläutert. Es zeigen Figur 1 ein Kraftstoffeinspritzsystem in schematischer Darstellung, an dem der Gegenstand der Erfindung verwirklicht ist, Figur 2a und Figur 2b die Darstellung des Zusammenhangs zwischen NOₓ und Rußemission und dem spezifischen Kraftstoffverbrauch bei verschiedenen Einspritzdrücken des Kraftstoffhochdruckspeichers (Rail), Figur 3a und 3b die Auswirkung der erfindungsgemäßen Nacheinspritzung auf die Parameter Schwärzungsziffer SZ (Rußanteil), NOₓ und spezifischer Kraftstoffverbrauch im Verhältnis zum Betrieb der Brennkraftmaschine ohne Nacheinspritzung, aufgetragen bei verschiedenen Spritzbeginnzeiten, Figur 4a und 4b der Zusammenhang zwischen Schwärzungsziffer SZ, NOₓ Gehalt und spezifischen Kraftstoffverbrauch, aufgetragen über verschiedene Spritzbeginnzeiten im Vergleich zwischen einem Betrieb ohne Nacheinspritzung und einem Betrieb mit Nacheinspritzung bei unterschiedlichen Kraftstoffeinspritzdrücken, Figur 5 die Darstellung des Einspritzverlaufes anhand des Hubes der Nadel eines Kraftstoffeinspritzventils bei einer Haupteinspritzung und einer nachfolgenden Nacheinspritzung im Verhältnis zum sich im Brennraum einstellenden Druck, Figur 6 eine zu Figur 5 analoge Darstellung jedoch mit zusätzlicher Voreinspritzung und Figur 7a und 7b der Zusammenhang zwischen Schwärzungsziffer, NOₓ-Emission und spezifischen Kraftstoffverbrauch, aufgetragen über unterschiedlichen Spritzbeginnzeiten in Gegenüberstellung von einem Betrieb der Brennkraftmaschine ohne Vor- und Nacheinspritzung, mit Voreinspritzung aber ohne Nacheinspritzung und mit Voreinspritzung (VE) und mit Nacheinspritzung (NE).

### Beschreibung des Ausführungsbeispiels

In der Figur 1 ist ein Kraftstoffhochdruckspeicher 1 (Rail) dargestellt, der von einer Hochdruckpumpe 2 aus einem Kraftstoffvorratsbehälter 3 mit Kraftstoff versorgt wird. An den Kraftstoffhochdruckspeicher sind mehrere Kraftstoffeinspritzventile 5, 5' 5'' gleicher Bauart über Druckleitungen 6, 6', 6'' angeschlossen, die die Kraftstoffeinspritzventile mit Hochdruckkraftstoff versorgen. Dem Kraftstoffhochdruckspeicher wird dabei durch die Hochdruckpumpe 2 möglichst nur die Kraftstoffmenge zugeführt, die dann auch von den Kraftstoffeinspritzventilen entnommen wird. Dazu kann die Fördermenge der Hochdruckmenge 3 gesteuert werden in Abhängigkeit des Drucks (Raildruck) im Kraftstoffhochdruckspeicher (Rail). Zur Erfassung des Druckes ist ein Drucksensor 7 vorgesehen, dessen Ausgangswerte einer Steuereinrichtung 8 zugeführt werden. Diese werten das Druckfühlersignal 7 aus, bringt es in Relation zu einem vorgegebenen Sollwert, der z.B. in einem Kennfeld 9 abgespeichert sein kann und steuert entsprechend der Abweichung vom Sollwert die Hochdruckfördermenge der Hochdruckpumpe 2. Dazu kann z.B. Einfluß auf ein Drosselorgan 10 in der Zuleitung der Hochdruckpumpe genommen werden oder ein Eingriff in der Hochdruckpumpe selbst vorgenommen werden derart, daß z.B. bei mit konstanten Hub fördernden Pumpenkolben die Förderdauer mit Hilfe von Steuergliedern gesteuert wird. Solche Steuerglieder können Schrägklantensteuerungen sein, die elektrisch betätigt werden oder Magnetventile. Alternativ dazu kann die Förderpumpe 2 mit konstanter oder drehzahlabhängiger Fördermenge fördern und dabei einen Druck erzeugen, der über den Bedarf hinausgeht. Zur Einstellung des gewünschten Kraftstoffeinspritzdruckes im Kraftstoffhochdruckspeicher wird dann z.B. durch ein Drucksteuerventil 12, das im Bypass zur Hochdruckpumpe 2' liegt, elektrisch gesteuert der Druck im Kraftstoffhochdruckspeicher 1 korrigiert. Zusätzlich zu den genannten Steuerungsmöglichkeiten können begrenzende oder zusätzlich steuernde Drucksteuerventile 14 vorgesehen werden, die dann bei einer Vorsteuerung der Fördermenge auf der Seite der Förderpumpe 2 mit Hilfe einer Drossel 11 bzw. einer Förderpumpe 2' mit Drucksteuerventil 2 eine Feinsteuerung des Kraftstoffhochdruckes im Kraftstoffhochdruckspeicher vornehmen. Dieser hohe Druck ist im wesentlichen der Einspritzdruck, der am Kraftstoffeinspritzventil wirksam ist. Die Kraftstoffeinspritzventile sind insgesamt gleicher Bauart, von ihnen ist das Kraftstoffeinspritzventil 5'' näher dargestellt. Kraftstoffeinspritzventile elektrisch gesteuerter Art, wie dieses, die vorzugsweise zur Einspritzung aus einem Common-Rail, dem Kraftstoffhochdruckspeicher 1, dienen, haben vorzugsweise einen mit der nicht weiter gezeigten Einspritznadel verbundenen Kolben 16, der in einem Zylinder 17 des Kraftstoffeinspritzventilgehäuses 18 einen Steuerraum 19 stirnseitig begrenzt. Dieser Steuerraum ist ständig über eine Drossel 20 mit dem Kraftstoffhochdruckspeicher verbunden und ist ferner über ein elektrisch gesteuertes Ventil 21 über eine Entlastungsleitung 22 entlastbar. Ein solches Ventil, das als Steuerventil zu bezeichnen ist, kann elektromagnetisch aber auch durch einen Piezoaktor betätigt werden. Der letztgenannte bietet den Vorteil einer sehr hohen Steuergeschwindigkeit, was in Verbindung mit dem kleinen hydraulischen Raum des Steuerraums 19 ein sehr schnelles Schalten des Einspritzventiles bewirkt. Statt dieser Ausführung, wobei das Steuerventil 21 ein 2/2-Ventil ist, sind auch andere Ausführungen mit z.B. einem 3/2-Ventil möglich, mit dem der Steuerraum statt der ständigen Verbindung über die Drossel 20 wahlweise entweder mit dem Kraftstoffhochdruck oder mit dem Entlastungsraum verbunden wird. Schließlich sind auch Einspritzventile elektrisch gesteuerter Art bekannt, bei denen in der Zuleitung zwischen Kraftstoffhochdruckspeicher und Einspritzstelle am Kraftstoffeinspritzventil elektrisch gesteuerte Durchtrittsstellglieder vorgesehen sind. Bei dem in Figur 1 gezeigten Kraftstoffeinspritzventil liegt der Kraftstoffhochdruck ständig an einer Druckschulter 23 der Düsennadel 24 an, welche dann öffnet, wenn der Steuerraum 19 entlastet wird unter Einwirkung des an der Druckschulter anliegenden Öffnungskraft. Solche Ventile sind bereits bekannt und brauchen nicht näher beschrieben werden.

Die Kraftstoffeinspritzventile können nun durch die elektrische Steuereinrichtung 8 bei dem ständig anstehenden hohen Kraftstoffeinspritzdruck schnell selbst für kürzeste Kraftstoffeinspritzmengen geschaltet werden. Die Steuereinrichtung 8 hat dabei die Funktion, einen gewünschten Druck im Kraftstoffhochdruckspeicher einzuhalten, der im wesentlichen konstant ist, der sich aber letztlich auch im Verhältnis zu bestimmten Betriebsweisen der zugehörigen hier nicht gezeigten Brennkraftmaschine gezielt verändern läßt. Grundsätzlich sind die Werte des einzustellenden Kraftstoffdruckes in dem Kennfeld 9 gespeichert und können dort ggf. bei Eintreten bestimmter Betriebsparameter mit veränderlichen Werten abgerufen werden. Der im wesentlichen konstante Einstellwert wird dabei, wie bereits gesagt, mit dem Meßwert des Drucksensors 7 verglichen und es wird entsprechend dem Vergleichsergebnis über die Kraftstoffversorgung über die Kraftstoffhochdruckpumpe wirksam eingegriffen. Zugleich dient das Kennfeld der Speicherung der Betriebsparameter der Brennkraftmaschine die für die Bestimmung der Kraftstoffeinspritzmenge und des Kraftstoffeinspritzzeitpunktes maßgeblich sind. Im wesentlichen wird der Kraftstoffeinspritzzeitpunkt auf einen optimierten Wert gehalten, der im Kennfeld 9, aus einem Optimierungsverfahren gewonnen, abgelegt ist. In soweit würde das in Figur 1 jetzt vorgestellte Kraftstoffeinspritzsystem der üblichen Versorgung einer Brennkraftmaschine mit Einspritzkraftstoff dienen, wobei diese Art der Versorgung aus einem Kraftstoffhochdruckspeicher den wesentlichen Vorteil hat, mit sehr hohen, immer bereitstehenden Druck Kraftstoff exakt bemessen einzuspritzen. Insbesondere eine hohe Einspritzgüte und ein sehr vorteilhaftes Timing der Einspritzung werden damit erzielt. Der hohe Einspritzdruck fördert auch die Aufbereitung und die günstige Verteilung von Kraftstoff in den Brennräumen der Brennkraftmaschine und damit das Ziel, den Kraftstoff möglichst vollständig in diesen Brennräumen umzusetzen, bei niedriger Schadstoffemission und geringem Kraftstoffverbrauch. Dieser Verbrauch wird zunächst bekanntermaßen durch die Optimierung des Einspritzzeitpunktes erzielt.

Aus den Diagrammen sind die Zusammenhänge zwischen Schadstoffemission und Kraftstoffverbrauch bei verschiedenen Einspritzdrücken zu entnehmen. Figur 2a zeigt hierbei ein Kurvenschar mit kurvenkonstanter Einspritzdrücke. Der Kurvenverlauf wird durch den Spritzbeginn variiert und stellt den Zusammenhang zwischen Rußbestandteil und NOₓ Bestandteil im Abgas dar. Man erkennt, daß je geringer der NOₓ-Bestandteil im Abgas ist, um so höher wird der Rußanteil. Umgekehrt sinkt der Rußanteil mit zunehmendem NOₓ-Anteil bei sich änderndem Spritzbeginn. Es ist weiterhin der Kurve 2a zu entnehmen, daß mit zunehmendem Kraftstoffeinspritzdruck geringere Ruß und NOₓ-Werte erzielt werden. Betrachtet man jedoch den spezifischen Kraftstoffverbrauch, so erkennt man aus Figur 2b, daß zunächst ebenfalls der spezifische Kraftstoffverbrauch geringer wird, wenn die NOₓ-Emission zunimmt und umgekehrt. Nur ist es in diesem Fall so, daß mit zunehmenden Kraftstoffeinspritzdruck sich der spezifische Kraftstoffverbrauch zusammen mit dem NOₓ-Gehalt erhöhen. Zu einer Optimierung muß man einen mittleren Wert von Kraftstoffdruck und Einspritzzeitpunkt finden, bei dem alle Parameter Kleinstwerte haben, oder bei vorgegebenen Parametern, wie die NOₓ-Emission oder der Ruß, die übrigen Parameter Kleinstwerte annehmen. Eine Optimierung der Verbrennung bei der gegebenen Sachlage waren somit Grenzen gesetzt.

Erfindungsgemäß wird nun aber der Haupteinspritzung eine Nacheinspritzung angegliedert, wie man es dem Diagramm Figur 5 entnehmen kann. Dort ist über den Kurbelwellenwinkel der Nadelhub des jeweiligen Kraftstoffeinspritzventils aufgetragen und man erkennt an der unteren Linie den Verlauf einer Haupteinspritzung, die etwa bei 5° Kurbelwellenwinkel beginnt und bei 25° Kurbelwellenwinkel endet, nämlich dann, wenn der Nadelhub wieder den Wert 0.0 erreicht hat. Unmittelbar anschließend an diese Haupteinspritzung wird das Ventil nochmals geöffnet mit einem kleinen Nadelhub, der durch den Pfeil Nacheinspritzung bezeichnet ist und der dann etwa bei 28° Kurbelwellenwinkel wieder beendet ist. Über diese Einspritzvorgänge ist der Druck im Brennraum aufgezeichnet, der zunächst aufgrund der Kompression des Brennraumvolumens bis zu OT bei 0° Kurbelwellenwinkel ansteigt, dann entsprechend der Kolbenbewegung wieder etwas absinkt und dann im Verlauf der Haupteinspritzung und der aus der Einspritzung resultierenden Verbrennung und Expansion des Gasvolumens wieder ansteigt. Dieser Anstieg verläuft über die gesamte Haupteinspritzung und erfaßt auch noch den Bereich der Nacheinspritzung um dann mit zunehmendem Kurbelwellenwinkel allmählich wieder auf den Ausgangswert abzusinken.

Man erkennt aus diesem Zusammenhang, daß die Haupteinspritzung und die Nacheinspritzung direkt an der Verbrennung des Arbeitstaktes teilnehmen. Man erkennt ferner, daß die Nacheinspritzung eng an das Ende der Haupteinspritzung gekoppelt ist und erst dann erfolgt, wenn das Kraftstoffeinspritzventil am Ende der Haupteinspritzung ganz geschlossen hat. Der Abstand zwischen Haupteinspritzung und Nacheinspritzung wird möglichst kurz gehalten und es ist die Nacheinspritzung unmittelbar an das Ende der Haupteinspritzung angekoppelt, so daß mit zunehmender Haupteinspritzung somit bei einer Verschiebung des Haupteinspritzendes zu größeren Kurbelwellenwinkeln hin auch die Nacheinspritzung in Richtung größerer Kurbelwellenwinkel verschoben wird. Die zugehörige Brennkraftmaschine arbeitet dabei in der üblichen Weise ohne besondere sekundären Abgasnachbehandlungseinrichtungen. Haupteinspritzung und Nacheinspritzung erfolgen aus ein und dem selben Kraftstoffvorratsbehälter unter dem selben hohen Kraftstoffeinspritzdruck, wobei diese Nacheinspritzung selbst bei geringerem Nadelhub als eine vollwertige exakt gesteuerten Einspritzung zu betrachten ist, die sich ganz deutlich von ungewollten Nacheinspritzern bei geringem Kraftstoffeinspritzdruck unterscheiden. Wie eingangs erwähnt stehen solche Nacheinspritzer auch unter Einwirkung von reflektierenden Druckwellen in Druckleitungen zwischen Hochdruckquelle und Einspritzventilöffnung dann, wenn bereits geringfügig der Öffnungsdruck des Kraftstoffeinspritzventils überschritten wird. Dieser dann anstehende Druck entspricht in keiner Weise dem eigentlichen Kraftstoffeinspritzdruck, der zur Haupteinspritzung bzw. erforderlichen Kraftstoffaufbereitung notwendig ist. Elektrisch gesteuerte Ventile, insbesondere auch Ventile die mit einem Piezoaktor arbeiten sind dabei in der Lage, kürzeste Öffnungszeiten für die Nacheinspritzung exakt beherrschbar zur Verfügung zu stellen.

Die Auswirkung der Nacheinspritzung kann anhand der Figuren 3a und 3b erläutert werden. Dort sind Kurvenverläufe bei sich änderndem Spritzbeginn im Verhältnis zur Schwärzungsziffer und der NOₓ-Emission bzw. des spezifischen Kraftstoffverbrauchs zur NOₓ-Emission dargestellt und zwar für einen Betrieb der Brennkraftmaschine mit Nacheinspritzung und ohne Nacheinspritzung. In der Figur 3a erkennt man, daß mit zunehmenden Spritzbeginn in Richtung früh und zunehmenden NOₓ Gehalt die Kurven divergieren. Bei einem beispielsweise Spritzbeginn von +2° Kurbelwellenwinkel ergibt sich eine erhebliche Absenkung des Rußgehaltes im Abgas, wenn die Verbrennung mit Nacheinspritzung erfolgt. Vergleicht man dagegen gemäß Figur 3b die Auswirkung dieser Maßnahme auf den spezifischen Kraftstoffverbrauch so erkennt man, daß es hier zu keiner Verschlechterung kommt sondern die Kurven mit Nacheinspritzung und ohne Nacheinspritzung zueinander deckungsgleich verlaufen. Die in Figuren 3a und 3b gezeigten Werte wurden bei einer Brennkraftmaschinendrehzahl von 1 400 U/min und bei 75% Last ermittelt. Der Einspritzdruck betrug 900 bar bei einer Nacheinspritzmenge von ca. 12mg/Hub. Die Kurven gemäß Figur 2a und 2b wurden ebenfalls bei 1 400 U/min, aber bei 50% Last ermittelt.

Aufgrund optimierter Nacheinspritzung sind dabei Schwärzungszifferreduktion bis zu 30% möglich.

Die kleine direkt an Anschluß an das Ende der Haupteinspritzung eingebrachte Nacheinspritzmenge, die Teil der Gesamteinspritzmenge ist, bewirkt einen ganz neuen Anstoß der Verbrennung im Brennraum, der dazu führt, daß insbesondere die rußbildenden Bestandteile der Brenngase besser umgesetzt werden, ohne die übrigen Bestandteile der Schadstoffemission negativ zu beeinflussen. Als Teil der Gesamteinspritzmenge ist auch die Nacheinspritzmenge antriebswirksam. Es ist Ziel auch diese Nacheinspritzmenge vollständig umzusetzen im Gegensatz zu anderen Nacheinspritzverfahren, die ausschließlich dazu dienen, einen Katalysator die zu dessen Arbeiten notwendige HC-Emission bereitzustellen und diesen auf Betriebstemperatur zu halten.

Diese hier erreichten Zusammenhänge können dabei vorteilhaft zugleich auch zur Senkung des spezifischen Kraftstoffverbrauchs eingesetzt werden, solange befriedigende-Emissionswerte bezüglich der Schwärzungsziffer bzw. Ruß und der NOₓ-Emission eingehalten werden können. Figur 4a zeigt diesen Zusammenhang, wobei die Tatsache ausgenutzt wird, daß gemäß Figur 2b der spezifische Verbrauch mit sinkendem Kraftstoffeinspritzdruck ebenfalls sinkt. Dies gilt natürlich nicht unbeschränkt sondern im Rahmen des Basiseinspritzdruckes überhaupt. Man kann, vergleicht man Figur 2a, dann eine Erhöhung des Rußes mit sinkendem Kraftstoffeinspritzdruckes in Kauf nehmen, wenn durch die Nacheinspritzung ein Gewinn bezüglich der Rußziffer erzielt wurde. In Figur 4a sind zwei Kurven aufgezeichnet, ein mit Nacheinspritzung bei 850 bar Einspritzdruck und eine ohne Nacheinspritzung bei 900 bar Einspritzdruck (Rail-Druck). Dies variiert über den Spritzbeginn. Man erkennt, daß durch diese Wahl des Einspritzdruckes die beiden Kurven bei späten Spritzbeginnen nahezu deckungsgleich verlaufen, d.h. daß mit Nacheinspritzung und Absenkung des Einspritzdruckes sich die Schwärzungsziffer im Bezug auf die NOₓ-Emission nicht verschlechtert. Betrachtet man hingegen die Auswirkung bezüglich des spezifischen Kraftstoffverbrauches, so erkennt man aus Figur 4b, daß sich die Kurven mit Nacheinspritzung und ohne Nacheinspritzung gegeneinander verschoben haben derart, daß bei einem Betrieb mit Nacheinspritzung und niedrigerem Einspritzdruck ein Verbrauchsvorteil ergibt.

Auf diese Weise lassen sich die Abgasemission und die Verbräuche einer Brennkraftmaschine ohne zusätzliche Maßnahmen einer Abgasnachbehandlung im höchst wirtschaftlichen Maße verbessern. Die technische Möglichkeit ist insbesondere auch durch die Verwendung einer Hochdruckeinspritzung aus einem Kraftstoffhochdruckbehälter mit schnell gesteuerten Kraftstoffeinspritzventilen gegeben. Zusätzlich kann eine solche Einspritzung auch mit der bekannten Voreinspritzung kombiniert werden, die bekanntlich zu einer Senkung des Geräusches und des Verbrauches führt.

Dies wird im wesentlichen auf die Frühverlegung des Einspritzbeginns über die Voreinspritzung zurückgeführt. In der Figur 6 ist dieser Zusammenhang zu entnehmen. Es ist in der unteren Kurve beginnend bei Nadelhub 0.0 und bei Kurbelwellenwinkel von 0° Kurbelwellenwinkel der Beginn der Voreinspritzung eingezeichnet, der dann die Haupteinspritzung folgt, die ihrerseits wiederum von der Nacheinspritzung gefolgt wird. Der zugeordnete Druckverlauf im Brennraum ist in der darüberliegenden Kurve dargestellt und ist erkennbar, daß dieser Verlauf wesentlich gleichmäßiger als in Figur 5 verläuft. Insbesondere liegt auch hier die Nacheinspritzung voll im Arbeitsdruckbereich des Zylinders der Brennkraftmaschine. Aus den Figuren 7a und 7b sind die Auswirkungen auf die Parameter Schwärzungsziffer und NOₓ bzw. spezifischen Verbrauch in analoger Weise zu den Figuren 4a und 4b dargestellt. Es sind hier insgesamt 3 Kurven mit sich änderndem Spritzbeginn aufgetragen, eine erste Kurve, die wie in der Legende über der Figur 7b oben dargestellt sich aus dem Betrieb ohne Voreinspritzung (VE) und ohne Nacheinspritzung (NE) ergibt, eine zweite Kurve die sich aus dem Betrieb mit Voreinspritzung und ohne Nacheinspritzung ergibt und eine dritte Kurve schließlich die aus dem Betrieb mit Voreinspritzung und mit Nacheinspritzung resultiert. Man erkennt, daß bei geeigneter Wahl der übrigen Parameter, wie dem Kraftstoffeinspritzdruck, der hier wiederum auf 900 bar gehalten ist bei 5mg Voreinspritzmenge pro Hub und 12 mg Nacheinspritzmenge pro Hub, die Kurven im wesentlichen in den unteren NOₓ-Bereichen deckungsgleich verlaufen. Mit zunehmendem Spritzbeginn nach Früh verschlechtern sich die Ergebnisse bezüglich der Schwärzungsziffer bei einer Betriebsweise mit Voreinspritzung und ohne Nacheinspritzung erheblich. Das ergibt den bekannten Effekt der Voreinspritzung, die zwar geräuschmindernd und verbrauchsmindernd ist aber den Rußanteil im Abgas erhöht.

Die verbrauchsmindernde Wirkung ist unmittelbar der Figur 7b zu entnehmen, wobei die Kurve mit Voreinspritzung und die Kurve ohne Nacheinspritzung links der Kurve ohne Voreinspritzung und ohne Nacheinspritzung liegen. Mit dieser Kurve mit Voreinspritzung und ohne Nacheinspritzung ist dann jedoch die Kurve mit Voreinspritzung und mit Nacheinspritzung identisch mit einem gegnüber der von Figur 4 erhöhten Verbrauchsvorteil beim spezifischen Verbrauch. Verglichen jedoch mit Figur 7a ergibt sich hier eine wesentliche Minderung der Schadstoffemission im Bezug auf die Schwärzungsziffer bzw. den Ruß. Verzichtet man auf eine wesentliche Verbesserung der Rußemission, so kann man mit dieser kombinierten Maßnahme eine noch größere Verbesserung des Kraftstoffverbrauches bekommen. Insgesamt zeigt sich, daß die Nacheinspritzung zusammen mit den üblichen Maßnahmen zur Verbesserung Emission, Geräusch und Verbrauch bei Brennkraftmaschinen einen ganz wesentlichen Effekt ausübt, der im hohem Maße überraschend ist.

Die Nacheinspritzung, die wie gesagt unmittelbar an die Haupteinspritzung angekoppelt ist ist darüber hinaus noch bezüglich der Menge variabel. Dabei ist es wesentlich, daß die Nacheinspritzmenge gewisse Bereiche einhält, die insbesondere auch empirisch ermittelbar sind. Es hat sich gezeigt, daß bei Nacheinspritzmengen < 5mg/Hub keine spürbaren Verbesserungen bei der Schwärzungsziffer erzielbar sind. Auf der anderen Seite erhöht sich bei einer Erhöhung der Nacheinspritzmenge über 20mg/Hub hinaus die HC-Emission erheblich. Genauso wirkt es sich schädlich aus, wenn nicht die unmittelbare Ankoppelung der Nacheinspritzung an die Haupteinspritzung eingehalten wird. Mit zunehmendem Abstand des Spritzbeginns der Nacheinspritzung von der Haupteinspritzung setzt wieder eine hohe HC-Emission ein, die bisher auch dazu verwendet wurde, um nachgeschaltete Abgasnachbehandlungseinrichtungen im reduzierenden Sinne von NOₓ-Bestandteilen wirksam werden zu lassen. Wegen der unmittelbaren Ankoppelung der Nacheinspritzung an die Haupteinspritzung ist es erforderlich, daß die Steuerwerte für beide Einspritzungen in einem Kennfeld gespeichert sind ohne einen zusätzlichen erheblichen Aufwand durch Messen von Einspritznadelhüben zu erbringen. Natürlich wäre auch eine solche Messung auch bei laufendenm Normalbetrieb der Brennkraftmaschine durchführbar, was aber einen sehr hohen Aufwand bedeuten würde.

In einem Optimierungsverfahren werden deshalb die über das Betriebsfeld der Brennkraftmaschine erforderlichen Einspritzvorgänge mit Hilfe von Nadelhubmeßfühlern erfaßt und entsprechende Steuerwerte eingegeben, die zum Steuern der Nacheinspritzung erforderlich sind. Zugleich ist dabei die Steuerung des Einspritzdruckes optimierbar, um insbesondere zu den gewünschten Emissions- und Verbrauchswerten zu kommen. Dabei hat es sich gezeigt, daß erst ab einer bestimmten Last der Brennkraftmaschine die Nacheinspritzung im Sinne ihres Einsatzes wirksam ist. Die Grenze ist über die Erfassung der Emissionswerte meßbar und zur Steuerung der Nacheinspritzung in das Kennfeld eingebbar. Dabei liegt die Grenze in einem Bereich zwischen 10% und 25% der Vollast, d.h. erst ab größeren Werten ist es sinnvoll eine Nacheinspritzung vorzunehmen. Bei zunehmender Last wird dabei optimierend die Menge der Nacheinspritzung variiert im Bezug auf den jeweiligen Betriebspunkt. Es hat sich bei den Optimierungen gezeigt, daß bei einer gegebenen Drehzahl von 1 200 u/min z.B. die Nacheinspritzmengen mit steigender Last abnehmen können um maximale Verbesserungen der Abgasemission bzw. des Verbrauches zu erzielen. Umgekehrt ist der Zusammenhang zwischen Last und Nacheinspritzmenge bei einer höheren Drehzahl z.B. bei 2000 u/min so, daß die Nacheinspritzmenge mit zunehmender Last zunehmen muß, um gewünschte optimale Abgasemissionswerte bzw. Verbräuche zu erzielen. Bei anderen Motoren können eventuell andere Tendenzen auftreten.

Wesentlich ist, daß die Nacheinspritzung einen ganz erheblichen Einfluß auf die Verbrennung hat und das Verbrennungsergebnis ganz wesentlich verbessert. Bei bereits gegebenen Aufwand bezüglich eines Kraftstoffeinspritzsystems mit Common-Rail und elektrisch gesteuerten Einspritzventilen ist nur noch ein relativ geringer Aufwand zur Steuerung der Nacheinspritzung erforderlich.

## Patentansprüche

1. Verfahren zur Einspritzung von Kraftstoff in Brennräume einer luftverdichtenden selbstzündenden Brennkraftmaschine bei dem Kraftstoff durch eine Haupteinspritzung und eine der Haupteinspritzung nachfolgende Nacheinspritzung in den Brennraum der Brennkraftmaschine eingespritzt wird, wobei jeweils beide Einspritzmengen, die der Haupteinspritzung und die der Nacheinspritzung in den jeweiligen Brennraum, über dasselbe elektrisch gesteuerte Einspritzventil einem von einer Hochdruckpumpe ständig versorgten, Kraftstoff-Hochdruck-Speicher entnommen werden, wobei der Einspritzdruck für die Haupteinspritzung und die Nacheinspritzung derselbe ist, **dadurch gekennzeichnet, daß** der Beginn der Nacheinspritzung in Abhängigkeit von der Beendigung des Haupteinspritzvorgangs sich an diese anschliessend erfolgt, indem der Beginn der Nacheinspritzung fest an das Ende der Haupteinspritzung gekoppelt ist.

2. Verfahren nach Anspruch 1, **dadurch gekennzeichnet, daß** die Nacheinspritzung als Teil der pro Arbeitstakt des jeweilige Zylinders der Brennkraftmaschine einzuspritzenden Gesamteinspritzmenge an der Verbrennung beim jeweiligen Arbeitstakt teilnimmt.

3. Verfahren nach Anspruch 2, **dadurch gekennzeichnet, daß** der Abstand des Beginns der Nacheinspritzung vom Ende der Haupteinspritzung möglichst kurz ist.

4. Verfahren nach Anspruch 3, **dadurch gekennzeichnet, daß** die Menge der Nacheinspritzung in Abhängigkeit von Betriebsparametern der Brennkraftmaschine gesteuert wird und sich mit dem Betriebspunkt der Brennkraftmaschine verändert.

5. Verfahren nach einem der vorstehenden Ansprüche 1 bis 4, **dadurch gekennzeichnet, daß** der Beginn der Nacheinspritzung in Abhängigkeit von der Lage des Endes der Haupteinspritzung und die Nacheinspritzmenge mittels einer elektrischen Steuereinrichtung gesteuert werden, die die für die verschiedenen Betriebspunkte der Brennkraftmaschine erforderlichen Steuerwerte für die Nacheinspritzung entsprechend sich ändernden Betriebsparametern einem in einem Optimierungsvorgang gebildeten Kennfeld entnimmt.

6. Verfahren nach einem der vorstehenden Ansprüche, **dadurch gekennzeichnet, daß** der Betrieb der Brennkraftmaschine mit Nacheinspritzung erst oberhalb einer bestimmten Last der Brennkraftmaschine erfolgt.

7. Verfahren nach Anspruch 6, **dadurch gekennzeichnet, daß** die Last, ab der die Brennkraftmaschine mit Nacheinspritzung betrieben wird, dadurch bestimmt ist, daß bei der Optimierung der Menge der Nacheinspritzung ab dieser Last der Brennkraftmaschine eine Verringerung des Rußanteils im Abgas auftritt.

8. Verfahren nach Anspruch 7, **dadurch gekennzeichnet, daß** die Optimierung der Menge der Nacheinspritzung in Verbindung mit einer Optimierung des spezifischen Verbrauchs, der Rußemission und der NOₓ-Emission in Abhängigkeit des Spritzbeginns der Haupteinspritzung und des Einspritzdrucks, der im Kraftstoffhochdruckspeicher eingestellt wird.

9. Verfahren nach Anspruch 7 oder 8, **dadurch gekennzeichnet, daß** die Nacheinspritzung bei zunehmender Last der Brennkraftmaschine ab einem unteren Lastpunkt der Brennkraftmaschine einsetzt, der zwischen 10% und 25% vorzugsweise bei 25% der Vollast liegt.

10. Verfahren nach einem der vorstehenden Ansprüche 5 bis 9, **dadurch gekennzeichnet, daß** das Kennfeld der Nacheinspritzmenge und die durch das Schließen der Einspritzventile am Ende der jeweiligen Haupteinspritzung festgelegte Einspritzzeitpunkte für die Nacheinspritzung im Betriebsfeld der Brennkraftmaschine mit Hilfe von die Öffnungs- und Schließsignalen der Einspritzventile erfassenden Sensoren in Bezug auf die dabei auftretenden Rußemission im Abgas der Brennkraftmaschine erfaßt werden und optimierend für die jeweilige Brennkraftmaschine bei den verschiedenen Betriebspunkten und Betriebsparametern in dem Kennfeld festgelegt werden.

11. Verfahren nach einem der vorstehenden Ansprüche 5 bis 10, **dadurch gekennzeichnet, daß** bei dem Optimierungsvorgang zur Erzielung eines möglichst geringen Verbauchs bei Einhaltung der zulässigen NOₓ-Anteils und des zulässigen Rußgehalts der Einspritzdruck des Kraftstoffs im Kraftstoffhochdruckspeicher reduziert wird.

12. Verfahren nach Anspruch 11, **dadurch gekennzeichnet, daß** zusätzlich zur Haupteinspritzung und Nacheinspritzung die Brennkraftmaschine mit Voreinspritzung betrieben wird und die optimierte Werte von Einspritzdruck, Spritzbeginn der Haupteinspritzung, Nacheinspritzmenge, Spritzbeginn der Voreinspritzung, und Voreinspritzmenge in einem Kennfeld gespeichert werden, das von der elektronischen Steuereinrichtung zur Steuerung des Einspritzsystems verarbeitet und in Steuersignale zur Beeinflussung der genannten Werte beim Betrieb der Brennkraftmaschine umgewandelt wird.

## Claims

1. Method for injecting fuel into combustion chambers of an air-compressing, compression-ignition internal combustion engine, in which fuel is injected into the combustion chamber of the internal combustion engine by means of a main injection and an afterinjection which follows the main injection, each of the two injection quantities, i.e. that of the main injection and that of the afterinjection into the respective combustion chamber, being removed, via the same electrically controlled injection valve, from a high-pressure fuel store which is continuously supplied by a high-pressure pump, the injection pressure being identical for the main injection and the afterinjection, **characterized in that** the start of the afterinjection, as a function of the end of the main injection operation, is carried out subsequent to the latter by virtue of the start of the afterinjection being fixedly linked to the end of the main injection.

2. Method according to Claim 1, **characterized in that** the afterinjection, as part of the total injection quantity to be injected per combustion cycle of the corresponding cylinder of the internal combustion engine, participates in the combustion during the corresponding combustion cycle.

3. Method according to Claim 2, **characterized in that** the distance between the start of the afterinjection and the end of the main injection is as short as possible.

4. Method according to Claim 3, **characterized in that** the quantity of the afterinjection is controlled as a function of operating parameters of the internal combustion engine and changes with the operating point of the internal combustion engine.

5. Method according to one of the preceding Claims 1 to 4, **characterized in that** the start of the afterinjection, as a function of the position of the end of the main injection, and the afterinjection quantity are controlled by means of an electrical control device, which takes the control values, required for the various operating points of the internal combustion engine, for the afterinjection corresponding to changing operating parameters from a characteristic diagram formed in an optimization operation.

6. Method according to one of the preceding claims, **characterized in that** operation of the internal combustion engine with afterinjection only takes place above a certain load of the internal combustion engine.

7. Method according to Claim 6, **characterized in that** the load above which the internal combustion engine is operated with afterinjection is determined by a reduction in the particulate levels in the exhaust gas occurring above this load of the internal combustion engine during the optimization of the quantity of the afterinjection.

8. Method according to Claim 7, **characterized in that** the optimization of the quantity of the afterinjection in conjunction with an optimization of the specific consumption, the particulates emissions and the NOx emissions as a function of the start of the main injection and of the injection pressure which is set in the high-pressure fuel store.

9. Method according to Claim 7 or 8, **characterized in that** the afterinjection commences, as the internal combustion engine load increases, above a lower load point of the internal combustion engine which is between 10% and 25%, preferably is 25%, of the full load.

10. Method according to one of the preceding Claims 5 to 9, **characterized in that** the characteristic diagram for the afterinjection quantity and the injection instants for the afterinjection, which are defined by the closing of the injection valves at the end of the corresponding main injection, in the operating field of the internal combustion engine are recorded with the aid of sensors that record the opening and closing signals of the injection valves with respect to the particulates emissions which are then present in the exhaust gas from the internal combustion engine and are defined in the characteristic diagram in such a manner as to optimize the corresponding internal combustion engine at the various operating points and operating parameters.

11. Method according to one of the preceding Claims 5 to 10, **characterized in that** the injection pressure of the fuel in the high-pressure fuel store is reduced during the optimization operation in order to achieve the minimum possible consumption while still complying with the permissible levels of NOₓ, and the permissible levels of particulates.

12. Method according to Claim 11, **characterized in that** in addition to the main injection and afterinjection, the internal combustion engine is operated with preinjection and the optimized values for injection pressure, start of the main injection, afterinjection quantity, start of the preinjection and preinjection quantity are stored in a characteristic diagram which is processed by the electronic control unit in order to control the injection system and is converted into control signals for influencing the said values during operation of the internal combustion engine.

## Revendications

1. Procédé d'injection de carburant dans la chambre de combustion d'un moteur à combustion interne à compression d'air et allumage non commandé, selon lequel le carburant est injecté par une injection principale et une post-injection à la suite de l'injection principale dans la chambre de combustion du moteur à combustion interne,
selon lequel, chaque fois deux doses d'injection, celle de l'injection principale et celle de la post-injection dans la chambre de combustion respective, sont prélevées par la même soupape d'injection à commande électrique d'un accumulateur de carburant à haute pression alimenté en permanence par une pompe à haute pression,
la pression d'injection pour l'injection principale et la post-injection étant la même,
**caractérisé en ce que**
le début de la post-injection se fait en fonction de la fin de l'opération d'injection principale en rejoignant celle-ci et le début de la post-injection est couplé solidairement à la fin de l'injection principale.

2. Procédé selon la revendication 1,
**caractérisé en ce que**
la post-injection fait partie de la dose totale à injecter par cycle de travail pour le cylindre respectif du moteur à combustion interne pour la combustion dans ce cycle de travail.

3. Procédé selon la revendication 2,
**caractérisé en ce que**
la distance entre le début de la post-injection et la fin de l'injection principale est aussi courte que possible.

4. Procédé selon la revendication 3,
**caractérisé en ce que**
la dose de la post-injection est commandée selon les paramètres de fonctionnement du moteur à combustion interne et varie suivant le point de fonctionnement du moteur à combustion interne.

5. Procédé selon l'une des revendications 1 à 4,
**caractérisé en ce que**
le début de la post-injection est commandé en fonction de la position de la fin de l'injection principale et la dose de post-injection est commandée à l'aide d'une installation de commande électrique qui prend les valeurs de commande nécessaires aux différents points de fonctionnement du moteur à combustion pour la post-injection selon les paramètres de fonctionnement variables dans un champ de caractéristiques formé dans une opération d'optimisation.

6. Procédé selon l'une des revendications précédentes,
**caractérisé en ce que**
le fonctionnement du moteur à combustion interne avec post-injection se fait seulement au-dessus d'une certaine charge appliquée au moteur à combustion interne.

7. Procédé selon la revendication 6,
**caractérisé en ce que**
la charge à partir de laquelle le moteur à combustion interne fonctionne avec une post-injection est définie **en ce que** lors de l'optimisation de la dose de post-injection, à partir de cette charge, on a une diminution de la teneur en suie dans les gaz d'échappement du moteur à combustion interne.

8. Procédé selon la revendication 7,
**caractérisé en ce que**
l'optimisation de la dose de post-injection se fait en liaison avec une optimisation de la consommation spécifique, de l'émission de suie et de l'émission d'oxyde NOₓ en fonction du début de l'injection principale et de la pression d'injection réglée dans l'accumulateur de carburant à haute pression.

9. Procédé selon la revendication 7 ou 8,
**caractérisé en ce qu'**
avec l'augmentation de la charge appliquée au moteur à combustion interne, la post-injection se met en oeuvre à partir d'un point de charge inférieur du moteur à combustion interne, ce point se situant de préférence entre 10 % et 25 % notamment à 25 % de la charge maximale.

10. Procédé selon l'une des revendications précédentes 5 à 9,
**caractérisé en ce que**
le champ de caractéristiques de la dose de post-injection et les instants d'injection pour la post-injection, fixés par la fermeture des soupapes d'injection à la fin de l'injection principale respective, sont saisis dans le champ de fonctionnement du moteur à combustion interne avec les capteurs saisissant les signaux d'ouverture et de fermeture des soupapes d'injection par rapport à l'émission de suie ainsi produite dans les gaz d'échappement du moteur à combustion interne et ils sont fixés de manière optimisée pour le moteur à combustion interne respectif aux différents points de fonctionnement et paramètres de fonctionnement dans le champ de caractéristiques.

11. Procédé selon l'une des revendications précédentes 5 à 10,
**caractérisé en ce que**
lors de l'opération d'optimisation, pour arriver à une consommation aussi réduite que possible tout en respectant la teneur autorisée en oxyde NOₓ et la teneur autorisée en suie, on réduit la pression d'injection du carburant dans l'accumulateur de carburant à haute pression.

12. Procédé selon la revendication 11,
**caractérisé en ce qu'**
en plus de l'injection principale et de la post-injection, on fait fonctionner le moteur à combustion interne avec une pré-injection et on enregistre dans un champ de caractéristiques les valeurs optimisées de la pression d'injection, le début de l'injection pour l'injection principale, la dose de post-injection, le début d'injection de la pré-injection et la dose de pré-injection, ce champ de caractéristiques étant traité par l'installation de commande électronique qui gère le système d'injection pour être transformé en des signaux de commande influençant les valeurs ci-dessus pendant le fonctionnement du moteur à combustion interne.
